# EUROPEAN PATENT SPECIFICATION

(11) **EP 0 610 682 B1**
(45) Date of publication and mention of the grant of the patent: **26.02.1997**
(21) Application number: 94100575.3
(22) Date of filing: 17.01.1994
(51) Int. Cl.: B60L 11/18, B60L 15/10

(54) **Method and apparatus for the optimised use of the drive batteries of an electric vehicle**
Verfahren und Vorrichtung zum optimierten Einsatz der Antriebsbatterien eines elektrischen Fahrzeuges
Méthode et dispositif pour l'utilisation optimisée des batteries de traction d'un véhicule électrique

(30) Priority: 11.02.1993 IT TO930084
(43) Date of publication of application: 17.08.1994
(73) Proprietor: FIAT AUTO S.p.A., 10135 Torino (IT)
(72) Inventor: Bonino, Marco, I-10138 Torino (IT); Vittone, Oreste, I-10024 Moncalieri (Torino) (IT)
(74) Representative: Serra, Francesco

(56) References cited:
- US-A- 3 943 420

## Description

The present invention relates to a method and apparatus for optimised use of the drive batteries of an electric vehicle.

It is known that the range of an electric vehicle depends on the energy stored in the drive batteries which is strongly influenced by the driving "style"; that is to say a "sporting" type of driving with significant and sudden accelerations, and therefore with a requirement for high peaks of power, can severely reduce the range of the vehicle with respect to driving of the "quiet" type, that is without sharp speed variations.

It is also known that the useful capacity of a battery depends in a non-proportional manner on the way in which it becomes discharged, in other words on the current required; for example, for a twelve Volt 50Ah lead-acid accumulator with a discharge current of 10A, the discharge time is about five hours, whilst with a discharge current of 20A the discharge time falls sharply to two hours, equivalent to a useful capacity of 40Ah rather than the nominal 50Ah.

Document US-A-3 943 420 discloses a battery vehicle having a normal speed range for house to house deliveries and an extended speed range from lengthy journeys such as to and from delivery rounds. The extended speed range is engageable by operation of a manual range control. The manual range control is rendered inoperative on startup so that the extended speed range is not immediately available but only after a delay. Thus, high speed operation which is very wasteful of energy is avoided for house to house deliveries, enabling the round to be completed.

It is therefore evident that to increase the range it is necessary to limit the discharge current as far as possible.

The object of the present invention is to provide a method and apparatus for the optimised utilisation of the drive batteries of an electric vehicle for the purpose of increasing its range, which is particularly effective, reliable and of low cost.

According to the present invention this object is achieved by a method and apparatus having the characteristics set out in a specific manner in the claims which follow.

The invention will now be described with reference to the attached drawings, provided purely by way of non-limitative example, in which:
Figure 1 is a block schematic diagram illustrating the general structure of an apparatus according to the invention;
Figure 2 illustrates a further embodiment of the apparatus of Figure 1.

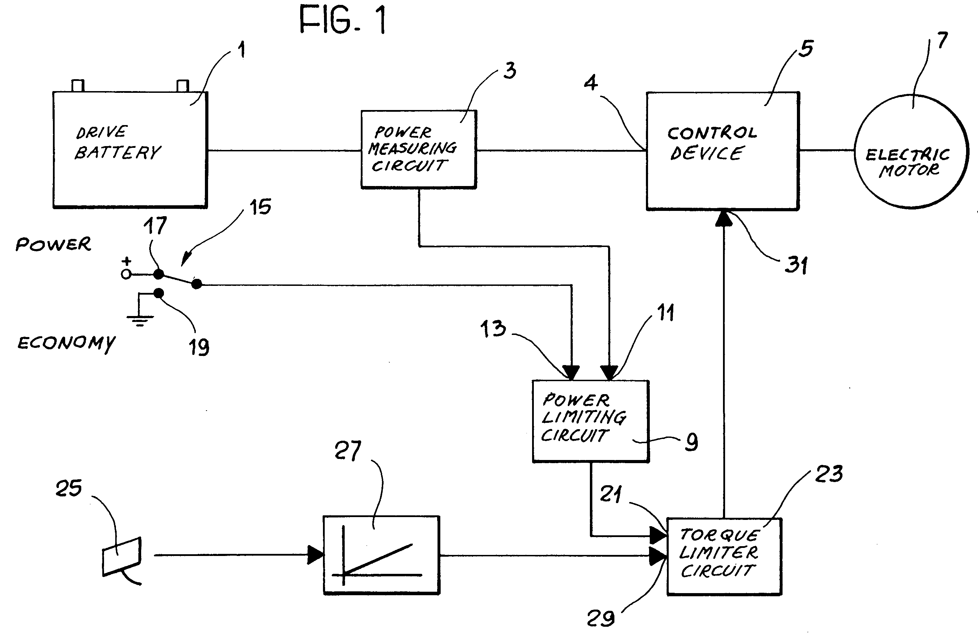

Referring to Figure 1, the reference numeral 1 generally indicates the assembly of drive batteries present on an electric vehicle, constituted by a number n of identical batteries connected in series and/or in parallel.

For simplicity this assembly will be considered as a single battery, the following statements also being true for an assembly of drive batteries.

The battery 1 is connected to a power measuring circuit 3 connected to a first input 4 of a control device 5 in turn connected to an electric drive motor 7 for the vehicle (not shown).

The measuring circuit 3 detects the voltage and current delivered from the battery 1 and correspondingly calculates the instantaneous electric power Pi delivered. The control device 5 receives the power Pi via the measuring circuit 3 and transfers to the electric motor 7 the electrical power necessary for this motor to develop a drive torque equal to a reference torque indicated by a signal applied to its input 31.

The power measuring device 3 is connected to a first input 11 of a power limiting circuit 9 the second input 13 of which receives a signal from a manually operable selector 15 which can assume two positions 17 and 19 for setting the system so as to allow the vehicle to operate in a first mode, the so-called power mode, or in a second mode, the so-called economy mode, respectively.

The power limiter circuit 9 is arranged for comparing the instantaneous power Pi delivered from the battery with two different predetermined reference values depending on whether the selector 15 is in the position 17 or the position 19 as will be clarified hereinbelow.

The power limiter circuit 9 is connected to a first input 21 of a torque limiter circuit 23.

The accelerator pedal of the vehicle is indicated 25. It is connected to an electric position sensor 27 which in turn is connected to the second input 29 of the torque limiter circuit 23. The output of this latter is connected to the input 31 of the control device 5. The torque limiter circuit is adapted to generate at its output a torque reference signal as a function of the position of the accelerator pedal 25 (indicative of the required drive torque) and of the signals which arrive from the power limiter circuit 9, which in their turn depend upon the instantaneous power Pi delivered by the battery 1 and on the position to which the selector 15 has been set.

Before going on to the description of the operation of the device of Figure 1 it is necessary to start by stating various considerations.

Every battery, for example a lead acid accumulator, has a maximum deliverable power which is a function of its physical characteristics; this power is stated by the battery manufacturer. It is evident that the power demanded cannot ever be greater than that maximum deliverable.

It is however suitable that the maximum power Pmax demanded from the battery is always less than the maximum power stated by the battery manufacturer in order to avoid possible irreversible damage to the battery itself.

It is therefore necessary for the electric vehicle drive control system to be arranged in such a way that it involves delivery of a maximum power Pmax (less than or equal to the nominal power which can be delivered by the battery) which guarantees that the battery itself is not damaged.

With reference to Figure 1, if in use the driver of the electrical vehicle wishes to drive in a "sporting" manner to the detriment of the range, he sets the selector 15 in the (power) position 17, setting the system to deliver, if necessary, the maximum power available, Pmax; on the other hand, if the driver wishes to drive in such a way as to achieve the maximum range, he positions the selector 15 in the position 19, setting the system to deliver to the motor at most a lower, but nevertheless acceptable maximum power Pmed, with Pmed < Pmax.

For example, considering an electric vehicle having four hundred kilograms of lead acid accumulator batteries, Pmax = about 30Kw and Pmed = about 20 Kw can be satisfactory values for normal driving requirements.

Having stated this we will now describe the operation of the device of Figure 1, supposing that the selector 15 is in the (power) position 17.

When the driver presses the accelerator 25, the detector 27 provides a corresponding signal indicative of the drive torque demand to the torque limiter 23.

The drive battery 1 delivers a certain instantaneous power Pi which is measured by the power measuring device 3 and then provided to the electric motor 7 via the control device 5. The instantaneous power Pi delivered by the battery 1 is compared in the power limiter 9 with the power Pmax. If as a result of this comparison Pi ≤ Pmax the power limiter 9 sends an enabling signal to the torque limiter 23 which provides to the control device 5 a signal indicative of the power demanded corresponding to the position of the accelerator pedal 25. If on the other hand the result of the comparison is that Pi > Pmax the power limiter 9 provides a command signal to the torque limiter 23 and correspondingly the torque limiter 23 reduces the reference torque applied to the control device 5 such that Pi ≤ Pmax even if the position of the accelerator pedal 25 corresponds to a demand for greater torque.

If the selector 15 is moved to the economy position 19 all that just described above continues to be valid with the single exception that the power limiter 9 compares the power Pi with Pmed. If Pi ≤ Pmed the power limiter circuit 9 sends an enabling signal to the torque limiter circuit 23 to apply a reference signal to the control device 5 indicative of the drive torque which corresponds to the position of the accelerator pedal 25. If on the other hand Pi > Pmed the power limiter circuit 9 provides a signal to the torque limiter circuit 23 such as to cause a reduction in the torque reference applied to the control device 5 thereby in fact limiting the torque delivered by the motor 7 such that Pi ≤ Pmed.

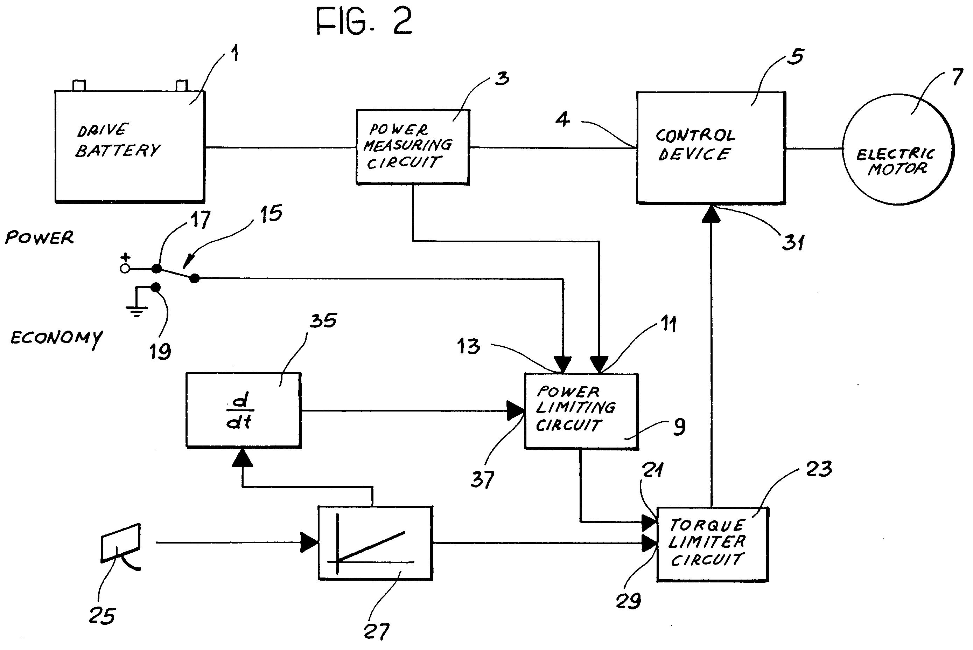

In the variant embodiment of Figure 2 the sensor 27 associated with the accelerator pedal 15 is connected to a differentiation circuit 35 connected to a third input 37 of the power limiter circuit 9.

In use, if the selector 15 is in the "economy" position 19 and if the signal provided at the output of the differentiator circuit 35 is indicative of a rapid actuation of the accelerator (for example for a so-called "kick down" typical of emergency situations in which the driver requires maximum acceleration from the vehicle) the power limiter circuit 9 assumes Pmax as the limit of deliverable power from the battery in place of Pmed such that if the pedal 25 is not subsequently released, the torque limiter circuit 23 correspondingly allows the delivery of the maximum torque by the motor, thereby making it possible to get out of the emergency situation.

Naturally, the principle of the invention remaining the same, the details of construction and the embodiments can be widely varied with respect to what has been described and illustrated, without by this departing from the ambit of the present invention as defined by the appended claims.

In particular, the two-position selector 15 may be replaced by a switch or a two-position push button, it could be in a special position on the gear change lever, etc. The power measuring circuit 3, the power limiting circuit 9 and the torque limiting circuit 23 can all be entirely or partly integrated in single circuit or else their functions may be performed by a microprocessor programmed with suitable software. The accelerator pedal may be replaced by a manual control device, for example a rheostat or control levers, etc.

## Claims

1. A method for the optimised use of the drive battery (1) of an electric motor vehicle provided with at least one drive battery (1) adapted to supply an electric propulsion unit (7) via a control device (5), an accelerator member (25) associated with the propulsion unit (7) and position sensor means (27) associated with the accelerator member (25) and coupled to the control device (5); characterised in that it comprises the steps of:
- selectively generating first and second control signals (17, 19);
- detecting the position of the accelerator member (25);
- measuring the electrical power (Pi) delivered by the drive battery (1);
- comparing the measured electrical power (Pi) with first and second reference values (Pmax, Pmed) the first (Pmax) of which is greater than the second (Pmed), depending on whether the first or the second control signal respectively has been generated;
- generating a drive torque reference signal in dependence on the position of the accelerator member (25) and on the measured electrical power (Pi); the said torque reference signal being indicative of the drive torque corresponding to the instantaneous position of the accelerator member (25) when the measured electrical power (Pi) is less than or equal to the first or second reference value (Pmax, Pmed) depending on whether the first or the second control signal has been generated, and being indicative of a first or second predetermined maximum torque value, the first of which is greater than the second, depending on whether the first or the second control signal has been generated, when the measured electrical power (Pi) is greater than the first or second reference value (Pmax, Pmed) respectively; and
- delivering electrical power to the propulsion unit (7) via the control device (5) such that the drive torque developed by it is equal to the generated torque reference value.

2. A method according to claim 1, characterised in that when the said second control signal (19) is generated the speed of actuation of the accelerator member (25) is detected and when the said actuation speed exceeds a predetermined value the power delivered by the battery (1) is compared to the said first power reference value rather than the second reference value, and the first drive torque reference signal rather than the second reference signal is generated and used for control of the electrical power delivered to the propulsion unit (7).

3. Apparatus for the optimised utilisation of the drive battery (1) of an electric motor vehicle having at least one drive battery (1) adapted to supply an electrical propulsion unit (7) via a control device (5), an accelerator member (25) associated with the propulsion unit (7), and position sensor means (27) associated with the accelerator member (25) and coupled to the said control device (5); characterised in that it comprises:
- power measurement means (3) connected to the battery (1);
- manually operable selector means (15) for selectively generating a first or a second control signal (17,19);
- power comparator and limiter means (9) connected to the said selector means (15)and to the said power measurement means (3), and arranged to compare the measured electrical power with a first, greater, or a second, smaller, reference value (Pmax, Pmed) when the said selector means (15) generate the first or the second control signal respectively;
- torque reference signal generator means (23) connected to the said power comparator and limiter means (9) and position sensor means (27) of accelerator member (25); the said generator means (23) being arranged to generate and apply to the said control device (5) a drive torque reference signal dependent on the position of the accelerator member (25) and of the measured electrical power (Pi); the said torque reference signal being indicative of the drive torque corresponding to the instantaneous position of the accelerator member (25) when the measured electrical power (Pi) is less than or equal to the first or the second reference value (Pmax Pmed) depending on whether the first or the second control signal has been generated, and being indicative of a first or second predetermined maximum torque value, the first of which is greater than the second, depending on whether the first or the second control signal has been generated, when the measured electrical power (Pi) is greater than the first or second reference value (Pmax Pmed) respectively; the said control device (5) being arranged to allow delivery of electrical power to the propulsion unit (7) such that the drive torque developed by it is equal to the torque reference value generated by the said generator means (23).

4. A device according to Claim 3, characterised in that it further includes a differentiator device (35) connected to the sensor means (27) for detecting the position of the accelerator member (25) and to the power comparator and limiter means (9) and operable to generate a signal indicative of the speed of operation of the said accelerator member (25); and in that the said power comparator and limiter means (9) are arranged to compare the measured electrical power (Pi) with the said first reference value (Pmax) when the said selector means (15) generate the second control signal and the speed of operation of the accelerator member (25) exceeds a predetermined threshold.

## Patentansprüche

1. Methode zur optimierten Anwendung der Antriebsbatterien (1) eines Fahrzeuges mit einem Elektromotor, das mit mindestens einer Antriebsbatterie (1) versehen ist, die geeignet ist, eine elektrische Antriebseinheit (7) mittels einer Steuereinrichtung (5), eines Beschleunigungselementes (25), das mit der Antriebseinheit (7) verbunden ist, und Positionssensormitteln (27), die mit dem Beschleunigungselement (27) verbunden sind und mit der Steuereinrichtung (5) gekoppelt sind, zu versorgen, dadurch gekennzeichnet, daß sie die folgenden Schritte umfaßt:
- Wahlweise Erzeugung erster und zweiter Steuersignale (17, 19);
- Erfassung der Position des Beschleunigungselementes (25);
- Messen der elektrischen Leistung (Pi), die von der Antriebsbatterie (1) abgegeben wird;
- Vergleichen der gemessenen elektrischen Leistung (Pi) mit ersten und zweitenVergleichswerten (Pmax, Pmed), deren erster (Pmax) größer ist als der zweite (Pmed), abhängig davon, ob bzw. entweder das erste oder das zweite Steuersignal erzeugt wurde;
- Erzeugen eines Antriebsmoment-Vergleichssignais in Abhängigkeit von der Position des Beschleunigungselementes (25) und der gemessenen elektrischen Leistung (Pi), wobei das Moment-Vergleichssignal das Antriebsmoment anzeigt, das der momentanen Position des Beschleunigungselementes (25) entspricht, wenn die gemessene elektrische Leistung (Pi) kleiner oder gleich dem ersten oder dem zweiten Vergleichswert (Pmax, Pmed) ist, abhängig davon, ob das erste oder das zweite Steuersignal erzeugt wurde, und wobei das Moment-Vergleichssignal einen ersten oder zweiten vorbestimmten maximalen Moment-Wert anzeigt, dessen erster größer ist als der zweite, abhängig davon, ob das erste oder das zweite Steuersignal erzeugt wurde, wenn die gemessene elektrische Leistung (Pi) größer ist als der erste oder der zweit Vergleichswert (Pmax, Pmed) bzw.; und
- Abgabe elektrischer Leistung an die Antriebseinheit (7) mittels der Steuereinrichtung (5), sodaß das von ihm entwickelte Antriebsmoment gleich dem erzeugten Moment-Vergleichswert ist.

2. Methode nach Anspruch 1, dadurch gekennzeichnet, daß, wenn das zweite Steuersignal (19) erzeugt wird, die Betätigungsgeschwindigkeit des Beschleunigungselementes (25) erfaßt wird, und wenn die Betätigungsgeschwindigkeit einen vorbestimmten Wert überschreitet, die von der Batterie (1) abgegebene Leistung mit dem ersten Leistungs-Vergleichswert, statt dem zweiten Vergleichswert verglichen wird, und das erste Antriebsmoment-Vergleichssignal, statt dem zweiten Vergleichssignal erzeugt und verwendet wird, um die an die Antriebseinheit (7) abgegebene elektrische Leistung zu steuern.

3. Einrichtung zur optimierten Anwendung der Antriebsbatterie (1) eInes Fahrzeuges mit einem Elektromotor, das mindestens eine Antriebsbatterie (1) aufweist, die geeignet ist, eine elektrische Antriebseinheit (7) mittels einer Steuereinrichtung (5), eines Beschleunigungselementes (25), das mit der Antriebseinheit (7) verbunden ist, und Positionssensormitteln (27), die mit dem Beschleunigungselement (25) verbunden sind und mit der Steuereinrichtung (5) gekoppelt sind, zu versorgen, dadurch gekennzeichnet, daß sie umfaßt:
- Mittel (3) zur Leistungsmessung, die mit der Batterie (1) verbunden sind;
- händisch betätigbare Auswahlmittel (15) zur wahlweisen Erzeugung eines ersten oder eines zweiten Steuersignals (17, 19);
- Mittel (9) zum Vergleichen und Begrenzen der Leistung, die mit den Auswahlmittel (15) und den Mitteln (3) zur Leistungsmessung verbunden sind und angeordnet, um die gemessene elektrische Leistung mit einem ersten, größeren oder einem zweiten, kleineren Vergleichswert (Pmax, Pmed) zu vergleichen, wenn die Auswahlmittel (15) das erste oder das zweite Steuersignal erzeugen;
- Mittel (23) zur Erzeugung eines Moment-Vergleichssignals, die mit den Mitteln (9) zum Vergleichen und Begrenzen der Leistung und den Positionssensormitteln (27) des Beschleunigungselementes (25) verbunden sind, wobei die Erzeugungsmittel (23) angeordnet sind, um in Abhängigkeit von der Position des Beschleunigungselementes (25) und der gemessenen elektrischen Leistung (Pi) ein Antriebsmoment-Vergleichssignal zu erzeugen und an die Steuereinrichtung (5) zu liefern, wobei das Moment-Vergleichssignal das Antriebsmoment anzeigt, das der momentanen Position des Beschleunigungselementes (25) entspricht, wenn die gemessene elektrische Leistung (Pi) kleiner oder gleich dem ersten oder dem zweiten Vergleichswert (Pmax, Pmed) ist, abhängig davon, ob das erste oder das zweite Steuersignal erzeugt wurde, und das Moment-Vergleichssignal einen ersten oder einen zweiten vorbestimmten maximalen Moment-Wert anzeigt, dessen erster größer ist als der zweite, abhängig davon, ob das erste oder das zweite Steuersignal erzeugt wurde, wenn die gemessene elektrische Leistung (Pi) größer ist als der erste oder der zweite Vergleichswert (Pmax, Pmed) bzw., und wobei die Steuereinrichtung (5) angeordnet ist, um die Abgabe elektrischer Leistung an die Antriebseinheit (7) zu erlauben, sodaß das von ihr entwickelte Antriebsmoment gleich dem Moment-Vergleichswert ist, der von den Erzeugungsmitteln (23) erzeugt wurde.

4. Einrichtung nach Anspruch 3, dadurch gekennzeichnet, daß sie weitem eine Differenziereinrichtung (35) umfaßt, die mit den Sensormitteln (27) zur Erfassung der Position des Beschleunigungselementes (25) und mit den Mitteln (9) zum Vergleichen und Begrenzen der Leistung verbunden ist und geeignet, ein Signal zu erzeugen, des die Betätigungsgeschwindigkeit des Beschleunigungselementes (25) anzeigt, und daß die Mittel (9) zum Vergleichen und Begrenzen der Leistung angeordnet sind, um die gemessene elektrische Leistung (Pi) mit dem ersten Vergleichswert (Pmax) zu vergleichen, wenn die Auswahlmittel (15) das zweite Steuersignal erzeugen und die Betätigungsgeschwindigkeit des Beschleunigungselementes (25) einen vorbestimmten Schwellenwert übersteigt.

## Revendications

1. Méthode pour l'utilisation optimisée de la batterie de traction (1) d'un véhicule à moteur électrique équipé d'au moins une batterie de traction (1) conçue pour alimenter un organe de propulsion électrique (7) par l'intermédiaire d'un dispositif de commande (5), d'un élément accélérateur (25) associé à l'organe de propulsion (7) et de moyens (27) formant capteur de position associés à l'élément accélérateur (25) et couplés au dispositif de commande (5); caractérisée par le fait qu'elle comporte les étapes consistant à:
- générer sélectivement un premier et un second signaux de commande (17, 19);
- détecter la position de l'élément accélérateur (25);
- mesurer la puissance électrique (Pi) fournie par la batterie de traction (1);
- comparer la puissance électrique mesurée (Pi) avec une première et une seconde valeurs de référence (Pmax, Pmed), dont la première (Pmax) est supérieure à la seconde (Pmed), selon que c'est le premier ou le second signal de commande, respectivement, qui a été généré;
- générer un signal de référence du couple de traction en fonction de la position de l'élément accélérateur (25) et de la puissance électrique mesurée (Pi); ledit signal de référence du couple étant indicatif du couple de traction correspondant à la position instantanée de l'élément accélérateur (25) lorsque la puissance électrique mesurée (Pi) est inférieure ou égale à la première ou à la seconde valeur de référence (Pmax, Pmed) selon que c'est le premier ou le second signal de commande qui a été généré, et étant indicatif d'une première ou d'une seconde valeur maximale prédéterminée du couple, dont la première est supérieure à la seconde, selon que c'est le premier ou le second signal de commande qui a été généré, lorsque la puissance électrique mesurée (Pi) est supérieure à la première ou à la seconde valeur de référence (Pmax, Pmed) respectivement; et
- fournir la puissance électrique à l'organe de propulsion (7) par l'intermédiaire du dispositif de commande (5) de façon que le couple de traction développé par elle soit égal à la valeur de référence du couple généré.

2. Méthode selon la revendication 1, caractérisée parle fait que, lorsque ledit signal de commande (19) est généré, la vitesse de manoeuvre de l'élément accélérateur (25) est détectée et que, lorsque ladite vitesse de manoeuvre excède une valeur prédéterminée, la puissance fournie par la batterie (1) est comparée à ladite première valeur de référence de la puissance plutôt qu'à la seconde valeur de référence, et que c'est le premier signal de référence du couple de traction, plutôt que le second signal de référence, qui est généré et utilisé pour commander la puissance électrique fournie à l'organe de propulsion (7).

3. Dispositif pour l'utilisation optimisée de la batterie de traction (1) d'un véhicule à moteur électrique équipé d'au moins une batterie de traction (1) conçue pour alimenter un organe de propulsion électrique (7) par l'intermédiaire d'un dispositif de commande (5), d'un élément accélérateur (25) associé à l'organe de propulsion (7) et de moyens (27) formant capteur de position associés à l'élément accélérateur (25) et couplés audit dispositif de commande (5); caractérisé par le fait qu'il comporte;
- des moyens (3) de mesure de la puissance reliés à la batterie (1);
- des moyens (15) formant sélecteur manoeuvrable manuellement pour générer sélectivement un premier ou un second signal de commande (17, 19);
- des moyens (9) formant comparateur de puissance et limiteur de puissance reliés auxdits moyens formant sélecteur (15) et auxdits moyens (3) de mesure de la puissance, et conçus pour comparer la puissance électrique mesurée avec une première, plus grande, ou une seconde, plus petite, valeur de référence (Pmax, Pmed) lorsque lesdits moyens formant sélecteur (15) génèrent le premier ou le second signal de commande respectivement;
- des moyens (23) formant générateur du signal de référence de couple reliés auxdits moyens (9) formant comparateur de puissance et limiteur de puissance et aux moyens (27) formant capteur de position de l'élément accélérateur (25); lesdits moyens formant générateur (23) étant conçus pour générer et appliquer audit dispositif de commande (5) un signal de référence du couple de traction en fonction de la position de l'élément accélérateur (25) et de la puissance électrique mesurée (Pi); ledit signal de référence du couple étant indicatif du couple de traction correspondant à la position instantanée de l'élément accélérateur (25) lorsque la puissance électrique mesurée (Pi) est inférieure ou égale à la première ou à la seconde valeur de référence (Pmax, Pmed) selon que c'est le premier ou le second signal de commande qui a été généré, et étant indicatif d'une première ou d'une seconde valeur maximale prédéterminée du couple, dont la première est supérieure à la seconde, selon que c'est le premier ou le second signal de commande qui a été généré, lorsque la puissance électrique mesurée (Pi) est supérieure à la première ou à la seconde valeur de référence (Pmax, Pmed) respectivement; ledit dispositif de commande (5) étant conçu pour autoriser la fourniture de puissance électrique à l'organe de propulsion (7) de façon telle que le couple de traction développé par lui soit égale à la valeur de référence du couple générée par lesdits moyens formant générateur (23).

4. Dispositif selon la revendication 3, caractérisé par le fait qu'il comporte en outre un dispositif différentiateur (35) relié aux moyens formant capteur (27) pour détecter la position de l'élément accélérateur (25) et aux moyens (9) formant comparateur de puissance et limiteur de puissance et pouvant opérer pour générer un signal indicatif de la vitesse de manoeuvre dudit élément accélérateur (25); et par le fait que lesdits moyens (9) formant comparateur de puissance et limiteur de puissance sont conçus pour comparer la puissance électrique mesurée (Pi) avec ladite première valeur de référence (Pmax) lorsque lesdits moyens formant sélecteur (15) génèrent le second signal de commande et la vitesse de manoeuvre de l'élément accélérateur (25) dépasse un seuil prédéterminé.
